# EUROPÄISCHE PATENTSCHRIFT

(11) **EP 3 177 743 B1**
(45) Veröffentlichungstag und Bekanntmachung des Hinweises auf die Patenterteilung: **18.07.2018**
(21) Anmeldenummer: 15750674.2
(22) Anmeldetag: 04.08.2015
(51) Int. Cl.: C21C 5/46, C21C 5/52, F27B 3/20, F27B 3/22, F27D 3/16, F27D 3/18, F27D 99/00

(54) **BRENNER-LANZEN-EINHEIT**
BURNER-LANCE UNIT
UNITÉ DE LANCE DE BRÛLEUR

(30) Priorität: 08.08.2014 DE 102014215794
(43) Veröffentlichungstag der Anmeldung: 14.06.2017
(73) Patentinhaber: Primetals Technologies Austria GmbH, 4031 Linz (AT)
(72) Erfinder: ABEL, Markus, 77694 Kehl-Bodersweier (DE); BEILE, Hannes, 77955 Ettenheim (DE); DORNDORF, Markus, 76534 Baden-Baden (DE); MÜLLER, Alexander, 77652 Offenburg (DE); PITZ, Ralf, 77694 Kehl (DE)
(74) Vertreter: Metals@Linz
(86) Internationale Anmeldenummer: PCT/EP2015/067949
(87) Internationale Veröffentlichungsnummer: WO 2016/020376

(56) Entgegenhaltungen:
- WO-A1-02/44617
- WO-A1-96/06954
- WO-A1-99/54511
- WO-A2-2012/089754

## Beschreibung

Die Erfindung betrifft eine Brenner-Lanzen-Einheit umfassend mindestens zwei Gasanschlüsse, ein Brennerrohr und ein konzentrisch zum Brennerrohr in diesem angeordnetes Lanzenrohr, wobei das Brennerrohr und das Lanzenrohr jeweils ein Gaseintrittsende und ein Gasaustrittsende aufweisen, und wobei das Lanzenrohr an seinem Gasaustrittsende eine Lavaldüse aufweist, die lösbar mit dem Lanzenrohr verbunden ist. Die Erfindung betrifft weiterhin einen Ofen mit mindestens einer solchen Brenner-Lanzen-Einheit.

Eine derartige Brenner-Lanzen-Einheit ist hinreichend aus der DE 196 37 246 A1 bekannt. Sie sind durch einen Verbund aus einem Brenner und einer Lanze gebildet, wobei ein Betrieb einer solchen Einheit entweder im Brennermodus oder im Lanzenmodus erfolgen kann.

Bevorzugt metallurgische Öfen, insbesondere Lichtbogenöfen, weisen an der Ofenwand installierte, auf die Oberfläche der Metallschmelze im Ofenraum gerichtete Brenner auf, um Energie in die Metallschmelze einzutragen bzw. um den Aufschmelzvorgang im Ofen zu beschleunigen. Von einem solchen Brenner wird im Brennermodus eine Flamme ausgebildet. Dabei wird Brennstoff, insbesondere Erdgas, Öl und dergleichen, unter Zumischung von einem Brenngas enthaltenden Sauerstoff verbrannt.

Lanzen werden üblicherweise lokal und häufig nur zeitlich begrenzt in den Ofenraum eingeführt, um beispielsweise Gase zuzuführen, wie Sauerstoff zum Frischen der Metallschmelze, um Messungen durchzuführen oder Proben zu nehmen.

Wie bei einem herkömmlichen Brenner wird auch bei einer Brenner-Lanzen-Einheit, wenn sie im Brennermodus betrieben wird, eine Flamme erzeugt und Energie in den Ofenraum eingetragen. Die Brenner-Lanzen-Einheit kann jedoch nach Abschaltung des Brennermodus, d.h. Abschalten der Flamme, als Lanze genutzt werden, über die ein Gasstrom in den Ofenraum eingeblasen und gegebenenfalls Messungen an der Metallschmelze durchgeführt werden können. Dazu sind zusätzlich zu den an einem herkömmlichen Brenner vorhandenen Anschlüssen für Brennstoff und Brenngas an einer Brenner-Lanzen-Einheit Gasanschlüsse für mindestens ein im Lanzenmodus einzublasendes Gas vorhanden. Durch die Verwendung und Modifizierung eines herkömmlichen Brenners zu einer Brenner-Lanzen-Einheit derart, dass dieser auch als Lanze genutzt werden kann, entsteht somit kein Mehraufwand und kein Platzbedarf für zusätzliche Einrichtungen.

Im Lanzenmodus kann das Innere der Brenner-Lanzen-Einheit genutzt werden, um mittels einer Temperaturmesseinheit im Ofenraum eine Temperaturmessung an der Metallschmelze durchzuführen. Insbesondere wird dabei im Lanzenmodus einzublasendes Gas mit Überschallgeschwindigkeit in den Ofenraum in Richtung der Metallschmelze eingedüst, um sich auf der Metallschmelze ausbildende Schlacke wegzublasen und die Oberfläche der Metallschmelze lokal für eine kontaktlose Temperaturmessung freizulegen. Um einen Gasstrom mit Überschallgeschwindigkeit zu erzeugen, weist die Brenner-Lanzen-Einheit insbesondere eine Lavaldüse auf, in welche das einzublasende Gas mit einigen bar Druck eingespeist wird.

Eine Brenner-Lanzen-Einheit mit einer Temperaturmesseinrichtung ist in der WO 2011/018 403 A1 beschrieben.

Aus der US 5 599 375 A ist eine Brenner-Lanzen-Einheit bekannt, welche mindestens zwei Gasanschlüsse, ein Brennerrohr und ein konzentrisch zum Brennerrohr in diesem angeordnetes Lanzenrohr umfasst. Das Brennerrohr und das Lanzenrohr weisen jeweils einen Gaseintrittsende und ein Gasaustrittsende auf. Das Lanzenrohr weist an seinem Gasaustrittsende eine Lavaldüse auf. An das Brennerrohr ist ein Kopfelement angeflanscht, welches einen Brennraum bildet und wassergekühlt ist. Das Kopfelement weist Austrittsöffnungen auf, durch die hindurch das im Brennerrohr geführte Brenngas in den Brennraum strömen kann.

Der Standardbetrieb eines metallurgischen Ofens mit mindestens einer Brenner-Lanzen-Einheit erfolgt dabei üblicherweise folgendermaßen:
Während des Chargierens des aufzuschmelzenden Guts in den Ofenraum wird die Brenner-Lanzen-Einheit mit einer Schutzflamme betrieben, um die zum Ofenraum gerichtete Öffnung der Brenner-Lanzen-Einheit freizuhalten. Anschließend wird die Brenner-Lanzen-Einheit im Brennermodus betrieben und die Leistung stufenweise gesteigert, um ein Aufschmelzen des Guts im Ofenraum zu unterstützen. Sobald eine ausreichende Menge an Metallschmelze vorliegt, wird die Brenner-Lanzen-Einheit in den Lanzenmodus umgeschaltet und Sauerstoff oder Sauerstoff enthaltendes Gas zum Frischen der Metallschmelze mit Überschallgeschwindigkeit in den Ofenraum eingedüst. Während des Lanzenmodus brennt üblicherweise wieder die Schutzflamme, welche den eingedüsten Gasstrom umgibt. Sobald der Ofen abgestochen werden kann, d.h. der Ofenraum geleert werden kann, wird der Gasstrom abgeschaltet, die Brenner-Lanzen-Einheit unter Ausbildung der Schutzflamme weiterbetrieben und die Metallschmelze entnommen. Der Standardbetrieb beginnt nun von neuem mit dem Chargieren von einzuschmelzendem Gut in den
Ofenraum.

Die in den Ofenraum des Ofens ragende Seite der Brenner-Lanzen-Einheit, das sogenannte "heiße" Ende, ist dabei starken Temperaturwechseln sowie hohen mechanischen und korrosiven Belastungen ausgesetzt. Insbesondere der Endbereich, an dem sich die Gasaustrittsöffnungen des Brennerrohrs und des Lanzenrohrs befinden, werden sehr heiß und damit besonders stark beansprucht. Die Lebensdauer einer Brenner-Lanzen-Einheit hängt daher im Wesentlichen vom Zustand dieses Endbereiches ab.

Aufgrund der speziellen Bauart der Lavaldüse wird diese als separates Teil gefertigt und anschließend mit dem Lanzenrohr lösbar verbunden, so dass diese bei übermäßigem Verschleiß ausgetauscht werden kann. Bei einem Verschleiß im Bereich des Gasaustrittsendes des Brennerrohres wird dieses komplett gegen ein neues Brennerrohr ausgewechselt, wobei die Brenner-Lanzen-Einheit in einem zeitintensiven Wartungsvorgang komplett zerlegt und wieder zusammengebaut werden muss.

Aus der WO 2012/089 754 A2 ist eine Brenner-Lanzen-Einheit bekannt, die zwei Gasanschlüsse und ein Lanzenrohr aufweist, wobei das Lanzenrohr ein Gaseintrittsende und ein Gasaustrittsende aufweist. Das Lanzenrohr weist an seinem Gasaustrittsende eine Lavaldüse auf. Das Lanzenrohr ist von einem Kühlrohr umgeben.

Aus der WO 96/06954 A1 sind mehrere Ausgestaltungen bekannt.

In einer Ausgestaltung zeigt die WO 96/06954 A1 eine Brenner-Lanzen-Einheit, die mindestens zwei Gasanschlüsse, ein Brennerrohr und ein konzentrisch zum Brennerrohr in diesem angeordnetes Lanzenrohr aufweist, wobei das Brennerrohr und das Lanzenrohr jeweils ein Gaseintrittsende und ein Gasaustrittsende aufweisen, wobei das Lanzenrohr an seinem Gasaustrittsende eine Lavaldüse aufweist, und weiterhin das Brennerrohr eine Brennerdüse aufweist, die lösbar mit dem Brennerrohr verbunden ist

In einer anderen Ausgestaltung zeigt die WO 96/06954 A1 eine Brenner-Lanzen-Einheit, die mindestens zwei Gasanschlüsse, ein Brennerrohr und ein konzentrisch zum Brennerrohr in diesem angeordnetes Lanzenrohr umfasst. Das Brennerrohr und das Lanzenrohr weisen jeweils ein Gaseintrittsende und ein Gasaustrittsende auf. Das Brennerrohr ist konzentrisch innerhalb eines Kühlrohres angeordnet.

In einer wiederum anderen Ausgestaltung zeigt die eine Brenner-Lanzen-Einheit, bei der ein inneres, zentrales Rohr von zwei weiteren Rohren konzentrisch umgeben ist. Das innerste Rohr führt Wasser, die beiden äußeren Rohre ein sauerstoffreiches Gas und ein flüssiges Brennmaterial. Vor die Rohre ist eine Brennkammer angesetzt, die als wassergekühlt bezeichnet ist.

In einer wiederum anderen Ausgestaltung zeigt die WO 96/06954 A1 eine Brenner-Lanzen-Einheit, die mindestens zwei Gasanschlüsse, ein Brennerrohr und ein konzentrisch zum Brennerrohr in diesem angeordnetes Lanzenrohr umfasst. Das Brennerrohr und das Lanzenrohr weisen jeweils ein Gaseintrittsende und ein Gasaustrittsende auf. Das Brennerrohr ist innerhalb eines Kühlrohres angeordnet. Das Brennerrohr weist eine Brennerdüse auf, die von dem Kühlrohr umgeben ist.

Aus der WO 02/44617 A1 ist eine Brenner-Lanzen-Einheit bekannt, die mindestens zwei Gasanschlüsse, ein Brennerrohr und ein konzentrisch zum Brennerrohr angeordnetes Lanzenrohr umfasst. Das Brennerrohr und das Lanzenrohr weisen jeweils ein Gaseintrittsende und ein Gasaustrittsende auf.

Aus der WO 99/54511 A1 ist eine Brenner-Lanzen-Einheit bekannt, die mindestens zwei Gasanschlüsse, ein Brennerrohr und ein konzentrisch zum Brennerrohr in diesem angeordnetes Lanzenrohr umfasst. Das Brennerrohr und das Lanzenrohr weisen jeweils ein Gaseintrittsende und ein Gasaustrittsende auf. Das Lanzenrohr weist an seinem Gasaustrittsende eine Lavaldüse auf.

Es ist Aufgabe der Erfindung, eine wartungsfreundlichere Brenner-Lanzen-Einheit bereitzustellen.

Die Aufgabe wird für die Brenner-Lanzen-Einheit umfassend mindestens zwei Gasanschlüsse, ein Brennerrohr und ein konzentrisch zum Brennerrohr in diesem angeordnetes Lanzenrohr, dadurch gelöst,
- dass das Brennerrohr und das Lanzenrohr jeweils ein Gaseintrittsende und ein Gasaustrittsende aufweisen,
- dass das Lanzenrohr an seinem Gasaustrittsende eine Lavaldüse aufweist, die lösbar mit dem Lanzenrohr verbunden ist,
- dass weiterhin das Brennerrohr eine von dem Kühlrohr umgebene Brennerdüse aufweist, die lösbar mit dem Brennerrohr verbunden ist,
- dass die lösbare Verbindung zwischen dem Brennerrohr und der Brennerdüse mittels einer Verschraubung gebildet ist,
- dass die lösbare Verbindung zwischen dem Lanzenrohr und der Lavaldüse mittels einer Verschraubung gebildet ist,
- dass die Verschraubung zwischen dem Brennerrohr und der Brennerdüse aus einem an der Brennerdüse angeordneten, konzentrisch um die Längsachse des Lanzenrohres umlaufenden Außengewinde und einem mit diesem Außengewinde zusammenwirkenden, am Brennerrohr angeordneten Innengewinde besteht und
- dass die Verschraubung zwischen dem Lanzenrohr und der Lavaldüse aus einem an der Lavaldüse angeordneten, konzentrisch um die Längsachse des Lanzenrohres umlaufenden Außengewinde und einem mit diesem Außengewinde zusammenwirkenden, am Lanzenrohr angeordneten Innengewinde besteht.

Eine derartige Ausgestaltung der Brenner-Lanzen-Einheit ermöglicht einen Austausch der Brennerdüse, ohne gleichzeitig das Brennerrohr austauschen zu müssen. Der Austausch der Brennerdüse kann problemlos erfolgen, ohne die Brenner-Lanzen-Einheit komplett zulegen zu müssen. Der Wartungsvorgang kann schnell und kostengünstig mit geringem Personaleinsatz erfolgen. Die Anforderungen an die Qualifikation des Wartungspersonals sind gering, da der Aufbau der Brenner-Lanzen-Einheit als solcher nicht im Detail verstanden werden muss. Die Brennerdüse kann ganz nach Bedarf und Verschleißzustand zeitlich unabhängig von der Lavaldüse oder gleichzeitig mit dieser ausgetauscht werden.

Bevorzugt weist das Kühlrohr Kühlmittelkanäle auf, wobei die Kühlmittelkanäle mit mindestens zwei Kühlmittelanschlüssen verbunden sind. Das Kühlrohr vermindert die thermische Belastung des Brennerrohrs und des Lanzenrohrs und führt thermische Energie von dem stark von Verschleiß betroffenen Ende der Brenner-Lanzen-Einheit ab, um die Wartungszyklen zu verlängern.

Dabei ist es von Vorteil, wenn ein Außendurchmesser und/oder ein Innendurchmesser der Brennerdüse und/oder der Lavaldüse mindestens eine Einkerbung und/oder mindestens einen Vorsprung aufweist, die/der in Eingriff mit einer Schlüsseleinheit zum Lösen der Brennerdüse und/oder der Lavaldüse bringbar ist. Die Schlüsseleinheit ist dabei ein Werkzeug zur Abnahme der Brennerdüse und/oder der Lavaldüse von Brennerrohr bzw. Lanzenrohr und zum Einbau eines entsprechenden Ersatzteils. Der Wartungsvorgang kann dadurch beschleunigt erfolgen.

Ein Ofen, insbesondere ein metallurgischer Ofen, hat sich bewährt, der einen Ofenraum und mindestens eine erfindungsgemäße Brenner-Lanzen-Einheit aufweist, wobei die Gasaustrittsenden des Brennerrohrs und des Lanzenrohrs in Richtung des Ofenraums zeigend angeordnet sind. Bei dem metallurgischen Ofen handelt es sich insbesondere um einen Lichtbogenofen und dergleichen.

Die Figuren 1 bis 4 sollen eine erfindungsgemäße Brenner-Lanzen-Einheit und deren Einsatz an einem Ofen beispielhaft erläutern. So zeigt:
- FIG 1: eine Brenner-Lanzen-Einheit in dreidimensionaler Ansicht;
- FIG 2: einen Schnitt durch das heiße Ende der Brenner-Lanzen-Einheit gemäß FIG 1;
- FIG 3: eine starre Verbindung zwischen Lavaldüse und Brennerdüse; und
- FIG 4: schematisch einen Ofen mit einer Brenner-Lanzen-Einheit.

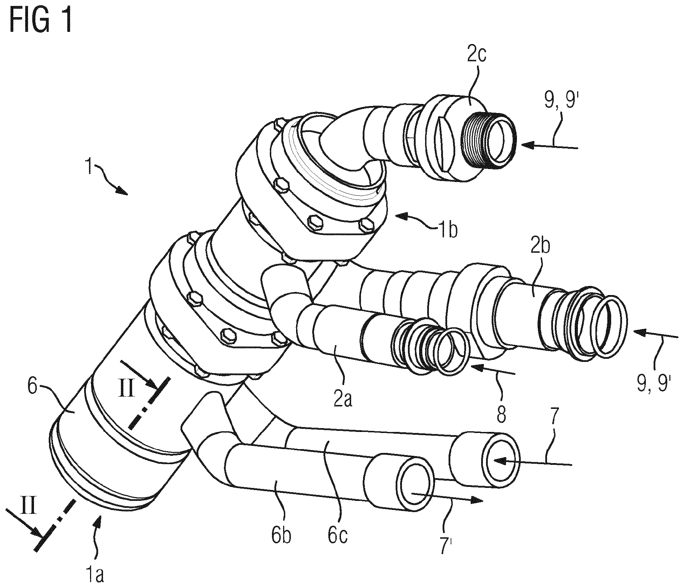

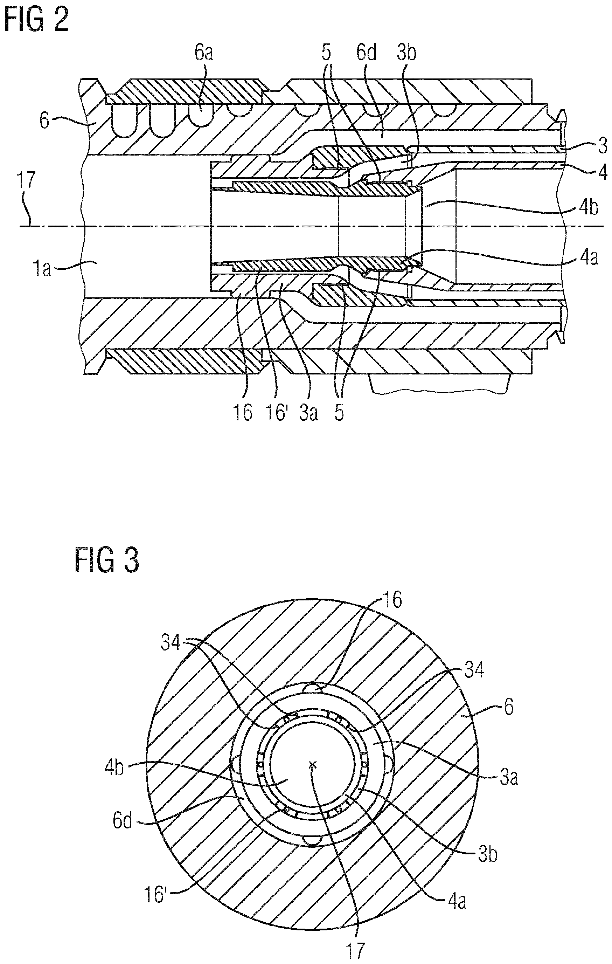

FIG 1 zeigt eine Brenner-Lanzen-Einheit 1 in dreidimensionaler Ansicht. Dabei sind das heiße Ende 1a und das kalte Ende 1b der Brenner-Lanzen-Einheit 1 gekennzeichnet. Die Brenner-Lanzen-Einheit 1 weist mehrere Gasanschlüsse 2a, 2b, 2c zur Zuführung von Brennstoff 8, Brenngas 9 oder Inertgas 9' auf. Im Lanzenmodus wird ein erstes Gas, hier bevorzugt in Form von Sauerstoff, abwechselnd mit einem zweiten Gas, hier Inertgas bevorzugt in Form von Stickstoff, mit Überschallgeschwindigkeit verdüst. Im Brennermodus wird Brennstoff 8 zusammen mit Brenngas 9, hier bevorzugt in Form von Sauerstoff, verbrannt. Ferner weist die Brenner-Lanzen-Einheit 1 ein Kühlrohr 6 mit Kühlmittelkanälen 6a (vergleiche FIG 2) und Kühlmittelanschlüssen 6b, 6c auf, wobei dem Kühlrohr 6 ein Kühlmittel 7, insbesondere Wasser, zuführbar ist. Mittels des Kühlmittels 7 wird die Brenner-Lanzen-Einheit 1 vor Überhitzung geschützt. Erwärmtes Kühlmittel 7' wird aus dem Kühlrohr 6 wieder abgeführt . Im Bereich des Gasanschlusses 2c können Anschlüsse für Messeinheiten, wie beispielsweise Temperaturmessenheiten, vorgesehen sein.

FIG 2 zeigt einen Schnitt II-II durch das heiße Ende 1a der Brenner-Lanzen-Einheit 1 gemäß FIG 1. Gleiche Bezugszeichen wie in FIG 1 kennzeichnen gleiche Elemente. Im Schnittbild sind nun das Brennerrohr 3, die daran mittels einer lösbaren Verbindung 5 angeordnete Brennerdüse 3a, das Lanzenrohr 4 sowie die daran mittels einer weiteren lösbaren Verbindung 5 angeordnete Lavaldüse 4a erkennbar. Die lösbaren Verbindungen 5 sind hier als Verschraubungen ausgeführt. Die Verschraubung zwischen dem Brennerrohr 3 und der Brennerdüse 4 besteht aus einem an der Brennerdüse 3a angeordneten Außengewinde und einem am Brennerrohr 3 angeordneten Innengewinde. Das Außengewinde und das Innengewinde wirken - selbstverständlich - zusammen. Das Außengewinde und demzufolge auch das Innengewinde laufen konzentrisch um die Längsachse 17 des Lanzenrohres 4 um. In analoger Weise ist die Verschraubung zwischen dem Lanzenrohr 4 und der Lavaldüse 4a aufgebaut. Weiterhin sind in dieser Darstellung die im Kühlrohr 6 vorhandenen Kühlmittelkanäle 6a erkennbar. Zwischen dem Kühlrohr 6 und dem Brennerrohr 3 ist ein Brenngaskanal 6d ausgebildet. Zwischen dem Brennerrohr 3 und dem Lanzenrohr 4 ist ein Brennstoffkanal 3b ausgebildet. Innerhalb des Lanzenrohres 3 verläuft entlang der Längsachse 17 des Lanzenrohres 4 ein Lanzenkanal 4b.

FIG 3 zeigt die Brenner-Lanzen-Einheit 1 aus FIG 1 in Richtung der Längsachse 17 des Lanzenrohrs 4 gesehen. Gleiche Bezugszeichen wie in den Figuren 1 und 2 kennzeichnen gleiche Elemente. Die Brennerdüse 3a weist an ihrem Aussendurchmesser Vorsprünge 16 auf. Die Lavaldüse 4a weist an ihrem Außendurchmesser ebenfalls Vorsprünge 16' auf. Die Vorsprünge 16, 16' werden beim Austausch der Brennerdüse 3a und/oder der Lavaldüse 4a mit einer Schlüsseleinheit in Eingriff gebracht und mit dieser gegenüber dem Brennerrohr 3 bzw. dem Lanzenrohr 4 verdreht und abgeschraubt. Nun können eine neue Brennerdüse bzw. eine neue Lavaldüse, ebenfalls mit der Schlüsseleinheit, eingesetzt und festgeschraubt werden.

Das Brennerrohr 3 wird im Kühlrohr 6 spielfrei oder zumindest nahezu spielfrei gehalten. Beispielsweise können zu diesem Zweck die Vorsprünge 16 entsprechend dimensioniert sein. In analoger Weise wird das Lanzenrohr 4 im Brennerrohr 3 spielfrei oder zumindest nahezu spielfrei gehalten. Beispielsweise können zu diesem Zweck die Vorsprünge 16' entsprechend dimensioniert sein.

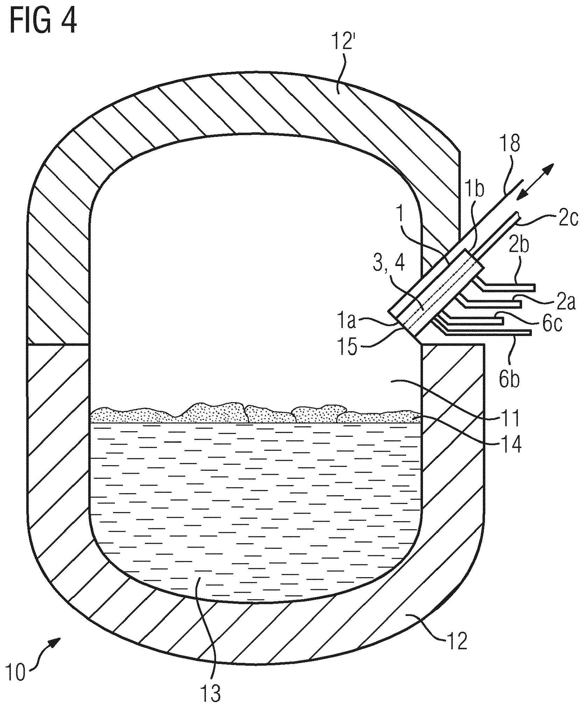

FIG 4 zeigt schematisch einen Ofen 10 mit einer Brenner-Lanzen-Einheit 1. Gleiche Bezugszeichen wie in den Figuren 1 bis 3 kennzeichnen gleiche Elemente. Der Ofen 1 weist einen Ofenraum 11 auf, der von einer Ofenwandung 12 und einem Ofendeckel 12' umgeben ist. Im Ofenraum 11 befindet sich eine Metallschmelze 13, die von einer Schlackeschicht 14 bedeckt ist. Die Brenner-Lanzen-Einheit 1 zeigt mit ihrem heißen Ende 1a in Richtung Ofenraum 12, wobei die Gasaustrittsenden 15 von Brennerrohr 3 und Lanzenrohr 4, die hier lediglich schematisch durch eine gestrichelte Linie angedeutet sind, ebenfalls zum Ofenraum 11 zeigen. Die Brenner-Lanzen-Einheit 1 ist dabei außen an der Ofenwandung 12 oder am Ofendeckel 12' angeordnet und ist bevorzugt in einfacher Weise, beispielsweise durch eine Anordnung an einem schwenk- oder verschiebbaren Panel 18, aus der Einbauposition in eine Wartungsposition bringbar, in der die Brennerdüse 3a und/oder die Lavaldüse 4a ausgetauscht werden können.

Die Figuren 1 bis 4 zeigen lediglich eine mögliche Ausführungsform der Brenner-Lanzen-Einheit, jedoch sind diverse weitere Bauformen realisierbar. Auch der Ofen 10 und die Anordnung der Brenner-Lanzen-Einheit 1 am Ofen 10 sind lediglich beispielhaft gewählt.

### Bezugszeichenliste

- 1: Brenner-Lanzen-Einheit
- 1a: heißes Ende
- 1b: kaltes Ende
- 2a, 2b, 2c: Gasanschluss
- 3: Brennerrohr
- 3a: Brennerdüse
- 3b: Brennstoffkanal
- 4: Lanzenrohr
- 4a: Lavaldüse
- 4b: Lanzenkanal
- 5: lösbare Verbindung
- 6: Kühlrohr
- 6a: Kühlmittelkanäle
- 6b, 6c: Kühlmittelanschluss
- 6d: Brenngaskanal
- 7: Kühlmittel
- 7': erwärmtes Kühlmittel
- 8: Brennstoff
- 9, 9': Brenngas oder Inertgas
- 10: Ofen
- 11: Ofenraum
- 12: Ofenwand
- 12': Ofendeckel
- 13: Metallschmelze
- 14: Schlackeschicht
- 15: Gasaustrittsende
- 16, 16': Vorsprung
- 17: Längsachse
- 18: Panel
- 34: Steg

## Patentansprüche

1. Brenner-Lanzen-Einheit (1) umfassend mindestens zwei Gasanschlüsse (2a, 2b, 2c), ein Brennerrohr (3) und ein konzentrisch zum Brennerrohr (3) in diesem angeordnetes Lanzenrohr (4),
- wobei das Brennerrohr (3) und das Lanzenrohr (4) jeweils ein Gaseintrittsende und ein Gasaustrittsende (15) aufweisen,
- wobei das Lanzenrohr (4) an seinem Gasaustrittsende eine Lavaldüse (4a) aufweist, die lösbar mit dem Lanzenrohr (4) verbunden ist,
- wobei das Brennerrohr (4) konzentrisch innerhalb eines Kühlrohres (6) angeordnet ist und weiterhin das Brennerrohr (3) eine von dem Kühlrohr (6) umgebene Brennerdüse (3a) aufweist, die lösbar mit dem Brennerrohr (3) verbunden ist,
- wobei die lösbare Verbindung (5) zwischen dem Brennerrohr (3) und der Brennerdüse (3a) mittels einer Verschraubung gebildet ist,
- wobei die lösbare Verbindung (5) zwischen dem Lanzenrohr (4) und der Lavaldüse (4a) mittels einer Verschraubung gebildet ist,
- wobei die Verschraubung zwischen dem Brennerrohr (3) und der Brennerdüse (3a) aus einem an der Brennerdüse (3a) angeordneten, konzentrisch um die Längsachse (17) des Lanzenrohres (4) umlaufenden Außengewinde und einem mit diesem Außengewinde zusammenwirkenden, am Brennerrohr (3) angeordneten Innengewinde besteht,
- wobei die Verschraubung zwischen dem Lanzenrohr (4) und der Lavaldüse (4a) aus einem an der Lavaldüse (4a) angeordneten, konzentrisch um die Längsachse (17) des Lanzenrohres (4) umlaufenden Außengewinde und einem mit diesem Außengewinde zusammenwirkenden, am Lanzenrohr (4) angeordneten Innengewinde besteht.

2. Brenner-Lanzen-Einheit (1) nach Anspruch 1,
**dadurch gekennzeichnet, dass** das Kühlrohr (6) Kühlmittelkanäle (6a) aufweist, wobei die Kühlmittelkanäle (6a) mit mindestens zwei Kühlmittelanschlüssen (6b, 6c) verbunden sind.

3. Brenner-Lanzen-Einheit (1) nach Anspruch 1 oder 2,
**dadurch gekennzeichnet, dass** ein Außendurchmesser und/oder ein Innendurchmesser der Brennerdüse (3a) und/oder der Lavaldüse (4a) mindestens eine Einkerbung und/oder mindestens einen Vorsprung (16, 16') aufweist, die/der in Eingriff mit einer Schlüsseleinheit zum Lösen der Brennerdüse (3a) und/oder der Lavaldüse (4a) bringbar ist.

4. Brenner-Lanzen-Einheit (1) nach Anspruch 1, 2 oder 3,
**dadurch gekennzeichnet, dass** zwischen dem Kühlrohr (6) und dem Brennerrohr (3) ein Brenngaskanal (6d) ausgebildet ist.

5. Brenner-Lanzen-Einheit (1) nach einem der Ansprüche 1 bis 4, **dadurch gekennzeichnet, dass** die Brennerdüse (3a) an ihrem Außendurchmesser Vorsprünge (16) aufweist, mittels derer das Brennerrohr (3) im Kühlrohr (6) spielfrei oder zumindest nahezu spielfrei gehalten wird.

6. Brenner-Lanzen-Einheit (1) nach einem der Ansprüche 1 bis 5, **dadurch gekennzeichnet, dass** die Lavaldüse (4a) an ihrem Außendurchmesser Vorsprünge (16') aufweist, mittels derer das Lanzenrohr (4) im Brennerrohr (3) spielfrei oder zumindest nahezu spielfrei gehalten wird.

7. Ofen (10), insbesondere metallurgischer Ofen, mit einem Ofenraum (11) und mit mindestens einer Brenner-Lanzen-Einheit (1) nach einem der Ansprüche 1 bis 6,
wobei die Gasaustrittsenden (15) des Brennerrohrs (3) und des Lanzenrohrs (4) in Richtung des Ofenraums (11) zeigend angeordnet sind.

## Claims

1. Burner-lance unit (1) comprising at least two gas connections (2a, 2b, 2c), a burner tube (3) and a lance tube (4) which is arranged within this burner tube (3) concentrically thereto,
- wherein the burner tube (3) and the lance tube (4) have in each case a gas inlet end and a gas outlet end (15),
- wherein the lance tube (4) at its gas outlet end has a de Laval nozzle (4a) which is releasably connected to the lance tube (4),
- wherein the burner tube (4) is arranged concentrically inside a cooling tube (6) and the burner tube (3) furthermore has a burner nozzle (3a) which is encompassed by the cooling tube (6) and releasably connected to the burner tube (3),
- wherein the releasable connection (5) between the burner tube (3) and the burner nozzle (3a) is formed by means of a screwed connection,
- wherein the releasable connection (5) between the lance tube (4) and the de Laval nozzle (4a) is formed by means of a screwed connection,
- wherein the screwed connection between the burner tube (3) and the burner nozzle (3a) consists of a male thread, which is arranged on the burner nozzle (3a) and extends concentrically around the longitudinal axis (17) of the lance tube (4), and a female thread, which is arranged on the burner tube (3) and interacts with this male thread,
- wherein the screwed connection between the lance tube (4) and the de Laval nozzle (4a) consists of a male thread, which is arranged on the de Laval nozzle (4a) and extends concentrically around the longitudinal axis (17) of the lance tube (4), and a female thread, which is arranged on the lance tube (4) and interacts with this male thread.

2. Burner-lance unit (1) according to Claim 1,
**characterized in that** the cooling tube (6) has cooling-medium passages (6a), wherein the cooling-medium passages (6a) are connected to at least two cooling-medium connections (6b, 6c).

3. Burner-lance unit (1) according to either of claims 1 and 2, **characterized in that** an outside diameter and/or an inside diameter of the burner nozzle (3a) and/or of the de Laval nozzle (4a) have, or has, at least one indentation and/or at least one projection (16, 16') which can be brought into engagement with a key unit for releasing the burner nozzle (3a) and/or the de Laval nozzle (4a).

4. Burner-lance unit (1) according to Claim 1, 2 or 3, **characterized in that** a combustible gas passage (6d) is formed between the cooling tube (6) and the burner tube (3).

5. Burner-lance unit (1) according to one of Claims 1 to 4,
**characterized in that** the burner nozzle (3a) on its outside diameter has projections (16) by means of which the burner tube (3) is retained in the cooling tube (6) in a clearance free manner, or at least almost clearance free manner.

6. Burner-lance unit (1) according to one of Claims 1 to 5,
**characterized in that** the de Laval nozzle (4a) on its outside diameter has projections (16') by means of which the lance tube (4) is retained in the burner tube (3) in a clearance free manner, or at least almost clearance free manner.

7. Furnace (10), especially a metallurgical furnace, with a furnace chamber (11) and having at least one burner-lance unit (1) according to one of Claims 1 to 6, wherein the gas outlet ends (15) of the burner tube (3) and of the lance tube (4) are arranged in a manner pointing in the direction of the furnace chamber (11).

## Revendications

1. Unité lance de brûleur (1) comprenant au moins deux branchements de gaz (2a, 2b, 2c), un tube de brûleur (3) et un tube de lance (4) disposé dans le tube de brûleur (3) de manière concentrique à celui-ci,
- dans laquelle le tube de brûleur (3) et le tube de lance (4) comportent chacun une extrémité d'entrée de gaz et une extrémité de sortie de gaz (15),
- dans laquelle le tube de lance (4) est pourvu, à son extrémité de sortie de gaz, d'une buse de Laval (4a) qui est reliée de manière amovible au tube de lance (4),
- dans laquelle le tube de brûleur (4) est disposé à l'intérieur d'un tube de refroidissement (6) de manière concentrique à celui-ci et, en outre, le tube de brûleur (3) est pourvu d'une buse de brûleur (3a) entourée par le tube de refroidissement (6) qui est reliée de manière amovible au tube de brûleur (3),
- dans laquelle la liaison amovible (5) entre le tube de brûleur (3) et la buse de brûleur (3a) est formée par un raccord fileté,
- dans laquelle la liaison amovible (5) entre le tube de lance (4) et la buse de Laval (4a) est formée par un raccord fileté,
- dans laquelle le raccord fileté entre le tube de brûleur (3) et la buse de brûleur (3a) est constitué d'un filet mâle situé sur la buse de brûleur (3a) et tournant de manière concentrique autour de l'axe longitudinal (17) du tube de lance (4) et d'un filet femelle situé sur le tube de brûleur (3) et coopérant avec ledit filet mâle,
- dans laquelle le raccord fileté entre le tube de lance (4) et la buse de Laval (4a) est constitué d'un filet mâle situé sur la buse de Laval (4a) et tournant de manière concentrique autour de l'axe longitudinal (17) du tube de lance (4) et d'un filet femelle situé sur le tube de lance (4) et coopérant avec ledit filet mâle.

2. Unité lance de brûleur (1) selon la revendication 1,
**caractérisée en ce que** le tube de refroidissement (6) comporte des canaux pour agent refroidisseur (6a), dans laquelle les canaux pour agent refroidisseur (6a) sont reliés à au moins deux branchements d'agent refroidisseur (6b, 6c) .

3. Unité lance de brûleur (1) selon la revendication 1 ou 2, **caractérisée en ce qu'**un diamètre extérieur et/ou un diamètre intérieur de la buse de brûleur (3a) et/ou de la buse de Laval (4a) présente au moins une rainure et/ou au moins une saillie (16, 16') qui peut être mise en prise avec une unité formant clé pour desserrer la buse de brûleur (3a) et/ou la buse de Laval (4a).

4. Unité lance de brûleur (1) selon la revendication 1, 2 ou 3, **caractérisée en ce qu'**un canal pour gaz combustible (6d) est formé entre le tube de refroidissement (6) et le tube de brûleur (3).

5. Unité lance de brûleur (1) selon l'une des revendications 1 à 4, **caractérisée en ce que** la buse de brûleur (3a) est pourvue sur son diamètre extérieur de saillies (16) grâce auxquelles le tube de brûleur (3) est maintenu sans jeu ou au moins à peu près sans jeu dans le tube de refroidissement (6).

6. Unité lance de brûleur (1) selon l'une des revendications 1 à 5, **caractérisée en ce que** la buse de Laval (4a) est pourvue sur son diamètre extérieur de saillies (16') grâce auxquelles le tube de lance (4) est maintenu sans jeu ou au moins à peu près sans jeu dans le tube de brûleur (3).

7. Four (10), notamment four métallurgique, comprenant une chambre de four (11) et au moins une unité lance de brûleur (1) selon l'une des revendications 1 à 6,
dans lequel les extrémités de sortie de gaz (15) du tube de brûleur (3) et du tube de lance (4) pointent en direction de la chambre de four (11).
